# EUROPEAN PATENT SPECIFICATION

(11) **EP 2 335 845 B1**
(45) Date of publication and mention of the grant of the patent: **14.08.2019**
(21) Application number: 10193843.9
(22) Date of filing: 06.12.2010
(51) Int. Cl.: B22C 9/04, B22C 9/10, B22C 9/24, B26F 1/04, F01D 5/18

(54) **Method for engineering a cast part**
Verfahren zur Herstellung eines Gussteils
Procédé de fabrication d'une pièce coulée

(30) Priority: 04.12.2009 US 631082
(43) Date of publication of application: 22.06.2011
(73) Proprietor: United Technologies Corporation, Farmington, CT 06032 (US)
(72) Inventor: Dube, Bryan P., Columbia, CT 06237 (US); Pietraszkiewicz, Edward F., Southington, CT 06489 (US); Candelori, David J., Glastonbury, CT 06033 (US)
(74) Representative: Dehns

(56) References cited:
- EP-A2- 1 543 896
- US-B1- 6 287 075
- US-B1- 6 368 060
- E. TAUPIN, J. BREITLING, W.-T. WU, T. ALTAN: "Material fracture and burr formation in blanking results of FEM simulations and comparison with experiments", JOURNAL OF MATERIALS PROCESSING TECHNOLOGY, no. 59, 1996, pages 68-78, XP002623226,
- A. Goijaerts: "Prediction of Ductile Fracture in Metal Blanking", , 1999, Retrieved from the Internet: URL:www.mate.tue.nl/mate/pdfs/54.pdf [retrieved on 2012-01-31]

## Description

### BACKGROUND

The disclosure relates to investment casting. More particularly, it relates to a method for engineering a cast part.

Investment casting is a commonly used technique for forming metallic components having complex geometries, especially hollow components, and is used in the fabrication of superalloy gas turbine engine components.

Gas turbine engines are widely used in aircraft propulsion, electric power generation, and ship propulsion. Cooling of engine components (especially of the turbine section(s)) is provided by flowing relatively cool air from the compressor section(s) of the engine through passageways in the components to be cooled.

For cast components, the cooling passageways may be created using casting cores that are later leached out of the casting. Commonly-assigned U.S. Patent Nos. 6,637,500 of Shah et al., 6,929,054 of Beals et al., 7,014,424 of Cunha et al., 7,134,475 of Snyder et al., and U.S. Patent No. 7,438,527 of Albert et al disclose use of ceramic core and refractory metal core (RMC) combinations. The refractory metal cores may be formed from sheet metal (e.g., sheet stock of molybdenum or molybdenum based alloys).

In certain other industries, asymmetries associated with punching of sheet metal have been observed. In punching, an approximately cylindrical (although not necessarily a circular cylinder) punch may be driven through a piece of metal from a first face side. Along the opposite second face side, the metal is supported by a die having an aperture shape complementary to the punch to receive the coupon of metal punched by the punch. As the punch enters the metal, it locally shears the coupon creating a relatively cylindrical surface very close to the punch cross section. The engagement of the punch produces high stress concentrations in the material below the shear zone. At some point in the travel of the punch, the stresses are high enough that the material fractures (breaks/ruptures) between the shear zone and the second face. The fracture causes the punched hole to diverge toward the second face. In the situation of a circular punch, the fracture zone is approximately frustoconical
EP 1543896 A2 relates to investment casting of super alloy turbine engine components.

### SUMMARY

If a refractory metal core (RMC) is punched, the punching asymmetry may be reflected in an asymmetry of the cast article features cast by the punched features. The punched features may be internal holes (which may cast posts in the ultimate cast article). Alternatively, the punched features may be the lateral perimeter of the RMC (in which case the cast features may be the lateral perimeter of the associated passageway in the cast article). The shear zone of the RMC will cast a relatively narrow portion of the post near one end; whereas the fracture zone will cast a relatively broader portion near the other end. The broader portion will also have a relatively shallow transition to the adjacent face of the slot like passageway cast by the RMC. Where there is a performance asymmetry across the slot in the cast article in use, the punching direction may be chosen to address the asymmetry (e.g., resulting from locally high temperature, locally high temperature gradients, locally high temperature fluctuations, locally high inertial loading, locally high stress from external forces, and the like). For example, the relatively broad portions of the posts may fall along the relatively higher desired heat transfer face of the passageway. Also, the relatively broad portions may be along the higher mechanical stress face of the passageway.

Thus, the invention relates to a method for engineering a cast part as defined in claim 1. The cast part has internal passageways including a slot. The slot is cast over a metallic sheet casting core. The casting core has a first face, a second face opposite the first face, and a plurality of holes extending between the first and second faces. The slot includes a first face cast by the core first face, a second face cast by the core second face, and a plurality of posts extending between the slot first and second faces and cast by the holes. The method comprises selecting a direction for punching the holes so that an asymmetry in hole cross section associated with said direction provides an asymmetry in post cross section associated with one or both of a desired relative heat transfer and a desired relative mechanical strength at said slot second face relative to said slot first face.

In various implementations, a perimeter portion of the core and at least some of the holes may be punched in the same direction. A first group of the holes may be punched from an opposite direction relative to a second group of the holes. The method may be performed using a computer model, wherein the computer model reflects the asymmetry in post cross section, and optionally including a computer modeling of heat transfer including a difference in thermal loading across the slot and a difference in heat transfer associated with the asymmetry in post cross section.

A metallic casting core or core substrate (e.g., prior to coating), which does not form part of the invention as claimed, has a first face, a second face opposite the first face, a lateral perimeter, and a plurality of through holes. The through holes are punched holes each having a shear zone and a fracture zone. The shear zone may be proximate to the first face and the fracture zone may be proximate to the second face. The perimeter may have a shear zone proximate to the first face and a fracture zone proximate to the second face. The core or substrate may be a molybdenum based alloy. A core may include the core substrate and a coating thereover.

A core may be used in a pattern for casting a component having an airfoil. The pattern has a pattern material having an airfoil portion. A casting core combination may be at least partially embedded in the pattern material and comprises the core or core substrate and at least one additional casting core. The first and second faces may be parallel. The thickness between the first and second faces may be 0.2 - 2.5 mm over a majority of an area of the metallic casting core.

The pattern may be formed by forming the metallic casting core from sheetstock and molding the at least one additional core of a ceramic. The metallic core and the at least one additional core are assembled. The pattern material may be molded at least partially over the casting core combination for forming the pattern.

The pattern may be used in a method for casting. The pattern is shelled. The pattern material is removed from the shelled pattern for forming a shell. Molten alloy is introduced to the shell. The shell and casting core combination are removed. The method may be used to form a gas turbine engine component.

A gas turbine engine component, which also does not form part of the invention as claimed, comprises an airfoil having a leading edge, a trailing edge, and pressure and suction sides extending between the leading and trailing edges. One or more cooling passageways extend through the airfoil from an inlet and include a trailing discharge slot having a plurality of posts. The posts may have relatively broad portions proximate the pressure side and relatively narrow portions proximate the suction side. The slot may have an inboard perimeter portion having a relatively shallow transition to a pressure side face of the slot and a relatively tighter transition to a suction side face of the slot.

A cast part, which also does not form part of the invention as claimed, has internal passageways including a slot being subject to differences in thermal mechanical stresses across the slot. Posts extending across the slot have a relatively broad portion against one of the first and second faces of the slot and a relatively narrow portion adjacent the other. Relatively broad portions are positioned to correspond to the difference in thermal loading such that, at each post, the relatively broad portion is along the relatively higher load one of the first and second faces and the relatively narrow portion is along the relatively lower load face. The article may have an airfoil. The passageway may be a trailing edge slot. The relatively broad portions may fall along a pressure side of the slot. All of the relatively broad portions may fall along the pressure side of the slot.

The pattern may be used in a method for casting. The pattern is shelled. The pattern material is removed from the shelled pattern for forming a shell. Molten alloy is introduced to the shell. The shell and casting core combination are removed. The method may be used to form a gas turbine engine component.

Another aspect, which does not from part of the invention, involves a gas turbine engine component comprising an airflow having a leading edge, a trailing edge, and pressure and suction sides extending between the leading and trailing edges. One or more cooling passageways extend through the airfoil from an inlet and include a trailing discharge slot having a plurality of posts. The posts may have relatively broad portions proximate the pressure side and relatively narrow portions proximate the suction side. The slot may have an inboard perimeter portion having a relatively shallow transition to a pressure side face of the slot and a relatively tighter transition to a suction side face of the slot.

Another aspect, also not forming part of the invention, involves a cast part having internal passageways including a slot being subject to differences in thermal mechanical stresses across the slot. Posts extending across the slot have a relatively broad portion against one of the first and second faces of the slot and a relatively narrow portion adjacent the other. Relatively broad portions are positioned to correspond to the difference in thermal loading such that, at each post, the relatively broad portion is along the relatively higher load one of the first and second faces and the relatively narrow portion is along the relatively lower load face. The article may have an airfoil. The passageway may be a trailing edge slot. The relatively broad portions may fall along a pressure side of the slot. All of the relatively broad portions may fall along the pressure side of the slot.

The details of one or more embodiments are set forth in the accompanying drawings and the description below. Other features, objects, and advantages will be apparent from the description and drawings, and from the claims.

### BRIEF DESCRIPTION OF THE DRAWINGS

FIG. 1 is a schematic sectional view of a first punching operation.
FIG. 2 is a schematic exploded view of a second punching operation.
FIG. 3 is a schematic exploded view of a third punching operation.
FIG. 4 is a schematic view of an RMC.
FIG. 5 is a sectional view of the RMC of FIG. 4, taken along line 5-5.
FIG. 6 is a sectional micrograph of a first punched hole.
FIG. 7 is a sectional micrograph of a second punched hole.
FIG. 8 is a view of a cast blade.
FIG. 9 is a sectional view of the blade of FIG. 8, taken along line 9-9.

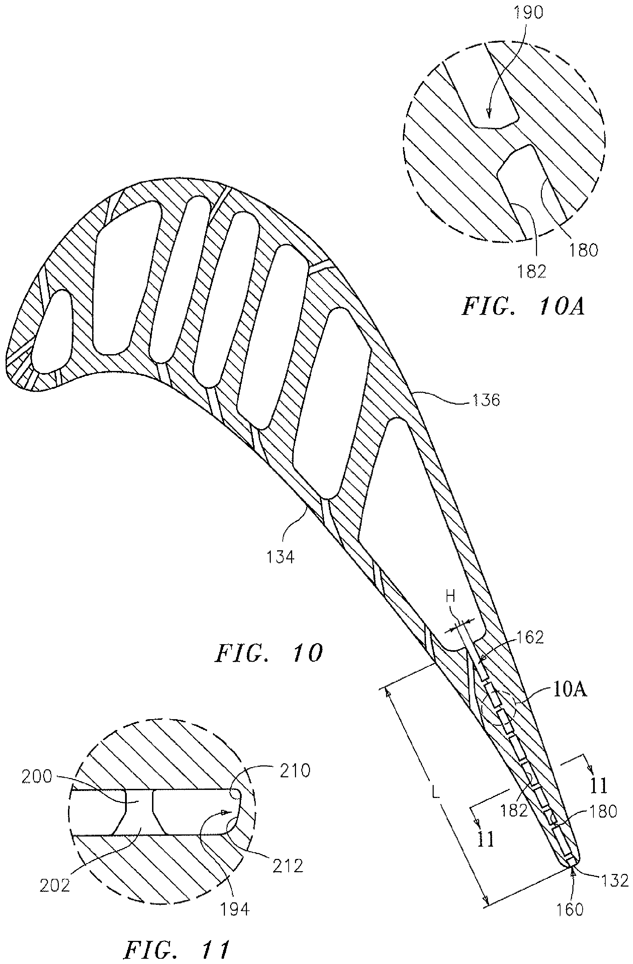

FIG. 10 is a sectional view of the blade of FIG. 8, taken along line 10-10.
FIG. 11 is a sectional view of the blade of FIG. 10, transverse to the cuts of FIGS. 9 and 10.
FIG. 12 is a plan view of a refractory metal core.
FIG. 13 is a sectional view of a casting before deshelling/decoring.
FIG. 14 is a view of a casting pattern.
FIG. 15 is a sectional view of the pattern of FIG. 14, taken along line 15-15.
FIG. 16 is a flowchart of an exemplary casting process.

Like reference numbers and designations in the various drawings indicate like elements.

### DETAILED DESCRIPTION

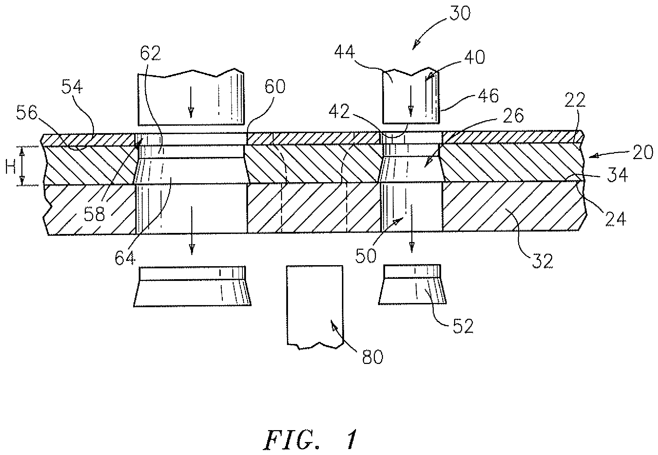

FIG. 1 shows a metallic sheet 20 having a first face 22 and a parallel/opposite second face 24 with a thickness H therebetween. The exemplary sheet is of a refractory metal-based stock (e.g., at least 50 wt.% molybdenum, tungsten, or niobium) having a thickness H in the vicinity of 0.01-0.10 inch (0.2-2.5mm), more narrowly, 0.01-0.02 inch (0.2-0.5mm) and transverse dimensions much greater than that. Alternate implementations may have non-uniform thickness (e.g., with a stepwise or continuous taper with at least portions in such thickness range). The sheet is shown positioned in a punching apparatus 30 for punching holes 26 in the sheet. The punching apparatus 30 includes a die or support plate 32 having a surface/face 34 along the second face 24. The apparatus further includes a plurality of punches 40 each having a distal end 42. The punches 40 are coupled to one or more punching actuators (not shown). Each punch has a shaft 44 having a distal portion 46 which has a cross-sectional form corresponding to the cross-sectional planform of the associated hole to be punched. The die 32 has holes 50 respectively associated with each of the punches and having a complementary shape but slightly larger to accommodate the punched coupon 52 of material.

A second support plate 54 may be positioned with a surface/face 56 along the first face and may have holes 58 respectively associated with the punches. The second support plate may help maintain sheet planarity (or other shape) during the punching. The holes 58 may be complementary to the associated adjacent punches and may have a smaller clearance than do the holes of the first support plate/die 32. In the punching operation, the actuators bring the distal ends 42 of punches 40 into initial engagement with the first face 22. Further engagement/pressure/movement punches into the sheet.

The initial further movement of the punches will slightly depress the contacted area of the first face, creating a slight rounding/roll zone 60. As stresses accumulate, the punch will penetrate further shearing the metal. This creates a shearing (shear) zone 62 just below the rounding zone 60. Further depression of the punch concentrates stress below the shearing zone. Eventually, the stress is sufficient to cause rupture/fracture/break which creates a rupture/fracture/break zone 64 between the shearing zone and the second face. The fracture zone 64 is generally divergent from the shear zone to the second face. Thus, in the case of a right circular cylindrical punch, the shear zone 62 will be a right circular cylinder of essentially the same diameter as the punch. The fracture zone 64 will be frustoconical, diverging from that diameter to a larger diameter.

Optionally, there may be one or more second punches 80 positioned to engage the second face of the sheet. This may be implemented in any of several ways. First, the second punches could be operable simultaneously with the first punches in a single punching apparatus. In such a situation, the second support and the die would, respectively, have holes complementary to the second punches (in a similar fashion to the holes of the die and second support being complementary to the first punches). In a second alternative, the second punches could be associated with a second punching apparatus (not shown) into which the sheet is moved after punching of the first holes. An intermediate third alternative involves punching the second holes in the same apparatus as the first holes are punched but in a temporally separate step.

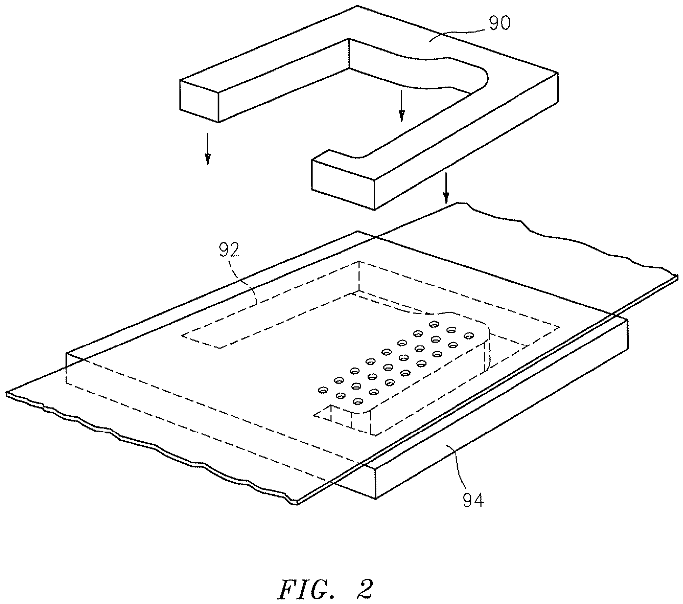

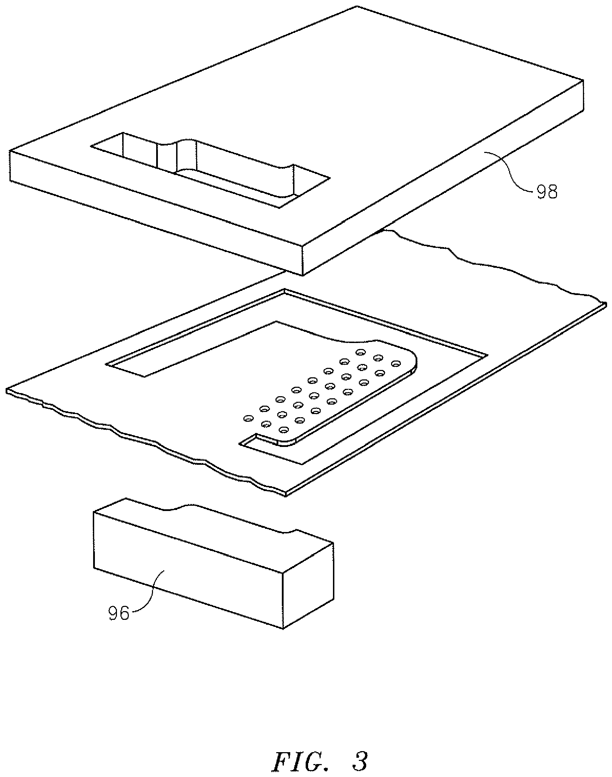

The perimeter of the RMC may be punched in the same process and/or apparatus/station or a separate one. FIG. 2 schematically shows a first separate station for punch forming the perimeter. In one or more stages, one or more punches 90 may punch the RMC from the sheet through an aperture 92 in a die 94 so that the RMC forms the punched coupon of material. FIG. 3 shows a second separate station for punch forming the second portion of the perimeter. In the FIG. 2 implementation, the punching from the pressure side 24 cuts respective leading, trailing, and outboard perimeter portions of the RMC. The shear zone and break zone for these portions may be reversed relative to at least some of the holes. The FIG. 3 station reverses this direction with a punch 96 approaching from the suction face 22 so as to cut an inboard perimeter portion of the RMC (adjust a complementary die 98 along the pressure face 24). Along this inboard perimeter portion, the shear and fracture zones are aligned with those of the holes that were also punched from the suction side.

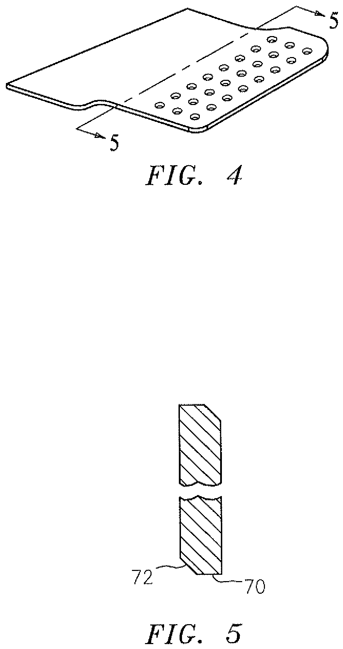

FIGS. 4 and 5 show the associated shift in shear versus fracture zone. The presence of two different perimeter orientations of shear versus fracture zone may be selected partially based upon manufacturing considerations. For example, along a particularly high stress area, the fracture zone may be located at the high stress side. Elsewhere, the fracture zone and shear zone may reflect ease of cutting (rather than any preference based on component performance).

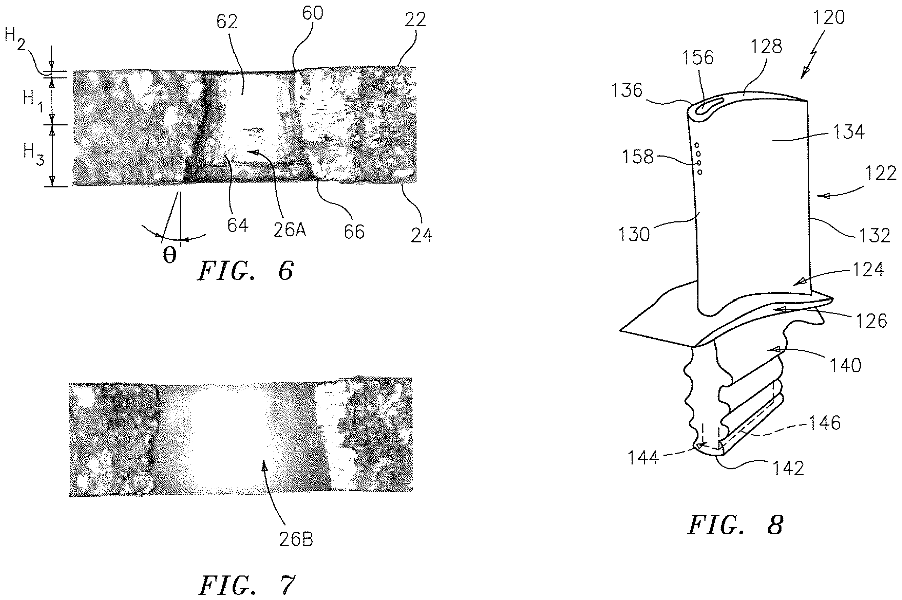

FIGS. 6&7 show the RMC 96 after an abrasive media finish. FIG. 6 shows a relatively narrow (small diameter) hole 26A, whereas FIG. 7 shows a relatively broad (large diameter) hole 26B. The abrasive finishing further smoothes the holes, in general, and particularly the transitions to the faces 22 and 24. This increases the radius of curvature at the roll zone 60 and at the transition/corner 66 between the fracture zone 64 and the second face 24. Because the media has greater access to the broad hole 26B, the smoothing/rounding effect is greater with the large/broad hole. This is discussed further below. The perimeter 68 has even more media access. Thus, the rounding/smoothing is more pronounced. With sufficient media exposure, the distinction between the shear zone and fracture zone may largely be eliminated. The perimeter shear zone 70 and perimeter fracture zone 72 (of FIG. 5) may end up with more heavily rounded transitions to the first and second faces.

The exemplary shear zone has a depth or height H₁ (FIG. 6). The roll zone may have a depth/height H₂ which may be essentially zero. The exemplary fracture zone has a depth/height H₃. The exemplary H₁ is at least 25% of H, more narrowly at least 33% (e.g., 20-40%). Exemplary H₃ is at least 25% of H, more narrowly at least 33% or 50% (e.g., 40-80%, more narrowly, 55-75%). Exemplary combined H₁ and H₃ are at least 80% of H₁, more narrowly at least 90% or 95%.

The exemplary fracture surface is off-normal to the faces 22 and 24 by an angle θ (which forms the half angle of the frustum) for a circular-sectioned hole. Exemplary θ is 5-40°, more narrowly 10-25°. Exemplary hole diameter (or other traverse dimension for non-circular holes (e.g., slot width for casting a wall)) along the shear zone is 14-26mil (0.35-0.65mm), more broadly, 10-50mil (0.25-1.3mm). Dimensions of the associated cast features would essentially be similar.

FIG. 8 shows a gas turbine engine blade 120. The blade 120 has an airfoil 122 extending from an inboard end 124 at the outboard surface of an inboard (inner diameter or ID) platform 126 to an outboard end or tip 28. The airfoil has a leading edge 130 and a trailing edge 132. The airfoil has a suction side/surface 136 and a pressure side/surface 134 extending between the leading edge 130 and the trailing edge 132. A convoluted attachment root (a so-called "fir-tree" root) 140 depends from an underside (or inboard surface) of the platform 126 and has an inboard end/surface 142.

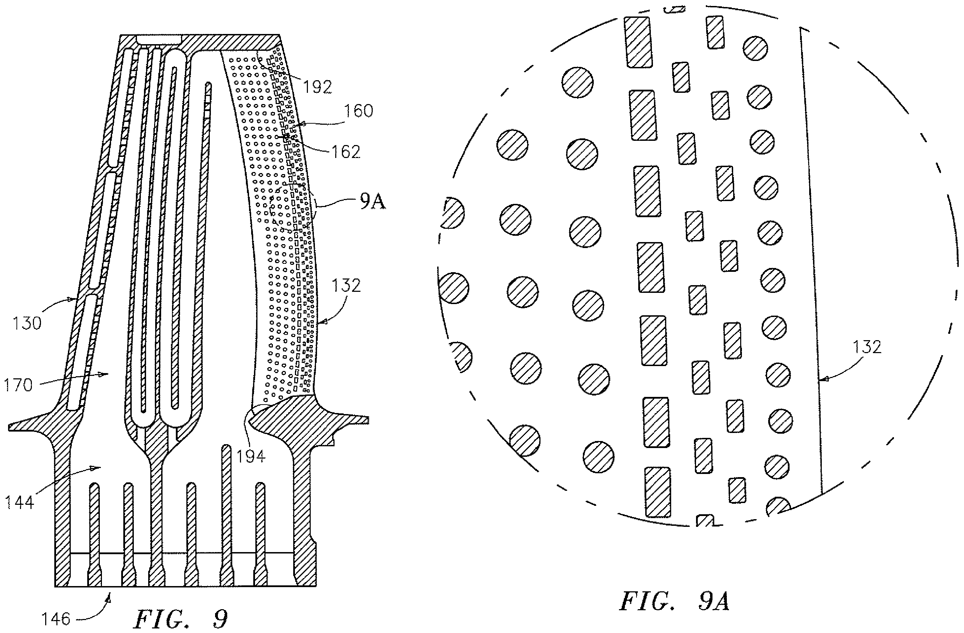

The exemplary blade 20 is cast from an alloy (e.g., a nickel-based superalloy) and has an internal cooling passageway system 144. The exemplary cooling passageway system has a plurality of inlets. The exemplary inlets are along the root 140, more particularly along the inboard end/surface 42. The exemplary blade has inlets 146 (FIG. 9), discussed further below. The exemplary cooling passageway system has a plurality of outlets. The exemplary outlets are along the airfoil 122. The exemplary outlets includes outlet 156 (FIG. 8) along the tip and outlets along the airfoil perimeter. Exemplary outlets along the airfoil perimeter include leading edge outlets 158 and one or more trailing edge outlets 160 (FIG. 9). The exemplary trailing edge outlets 160 are formed by a trailing edge discharge slot 162.

The exemplary inlets 146 of FIG. 9 may feed one or more trunks 170 extending radially outward within the root. In the exemplary airfoil, the trunks may feed one or more spanwise feed passageways within and/or through the airfoil. Each spanwise feed passageway may have one or more spanwise legs (e.g., combinations of up-pass legs toward the tip and down-pass legs back toward the root).

The exemplary trailing edge (discharge) slot 162 extends from a final/downstream (near the trailing edge) passageway leg. The exemplary discharge slot has a first face 180 and a second face 182 parallel thereto. The exemplary first face falls close/adjacent to the airfoil suction side 136 and is designated a suction face of the slot. Similarly, the second face is designated a pressure face of the slot. A plurality of posts 190 extend between the first and second faces. The slot may have perimeter portions (e.g., an outboard perimeter portion 192 near the tip and an inboard perimeter portion 194 near the platform.

In an exemplary implementation, the slot first face is cast by the RMC first face and the slot second face is cast by the RMC second face. The posts are cast by the holes in the RMC. Accordingly, the posts have a generally cylindrical first portion 200 (e.g., departing from cylindrical due largely to the effects of the roll zone, the abrasive media treatment (if any) and the smoothing effect of coating (if any)) extending from the slot first face and cast by the roll zone and shear zone of the associated RMC hole. The post dimensions will correspond to the hole dimensions (e.g., within any appropriate contraction tolerance and reflecting abrasive treatment (if any) RMC coating thickness (if any)). The post has a generally frustoconical second portion 202 between the first portion and the second face. The second portion is cast by the fracture zone of the hole and is correspondingly divergent from the first portion.

In the exemplary implementation of a trailing edge slot, the divergent post second portions 202 fall adjacent the pressure side of the airfoil. This side is subject to higher aerodynamic heating which passes higher thermal/mechanical stresses into the airfoil along the slot second face than are present at the slot first face. The relatively blunt/shallow (less tight) interface that the post second portion has with the slot second face allows better stress accommodation than does the relatively steeper (tighter) interface between the first portion and the slot first face. Similarly, at the slot perimeter portions 210 and 212 are respectively cast by the shear (and roll) zones of the RMC perimeter 68 and the fracture zone 72 of the RMC perimeter 68. This orientation of RMC produces a relatively shallower (higher radius of curvature) transition between the portion 212 and the face 182 than between the portion 210 and the face 180. This may be particularly significant near the inboard end 194 relative to the outboard end 192. To provide this similar orientation to those of the posts, the punches 90 are punched from the same direction as the punches 40.

In design/engineering, the principles may be applied in any of several ways. They may be implemented responsive to observation of actual part performance (e.g., part wear/damage/failure or in-use observation such as thermal imaging). Responsive to such observations, the hole punch directions may be changed to provide desired performance benefits (e.g., mitigate cracks that appeared near one side of the slot). It may similarly be used with computer simulations/modeling. For example, a model that does not consider the post asymmetry may simply model the post symmetrically. However, such a model could be used to determine which slot face experiences relatively high thermal and/or mechanical loads and, thereby, could explicitly or implicitly indicate to the user the appropriate punching directions for the appropriate holes. In a more sophisticated modification, the computer model could be programmed to consider the properties of the post asymmetry (e.g., particular angles θ for particular hole diameters and sheet thicknesses). This might be particularly relevant where the model is used to arbitrate between competing performance considerations of which individually might suggest a different hole orientation. The model could be used to select the preferred orientation.

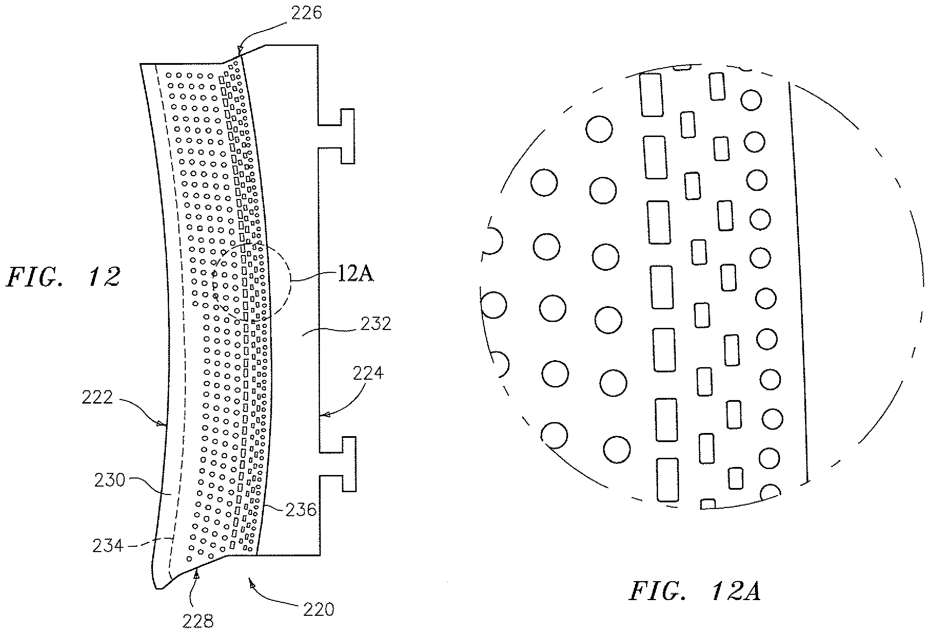

FIG. 12 shows an exemplary RMC having a variety of holes of different planform sections but any or all of which can have similar shear and fracture zones to those discussed above. The exemplary RMC perimeter 68 includes a leading portion 222, a trailing portion 224, an outboard portion 226, and an inboard portion 228. As is discussed further below, a leading portion 230 of the RMC becomes embedded in a ceramic feedcore when casting the ultimate part. A trailing portion 232 of the RMC may become embedded in a shell. The leading portion has a boundary 234 which forms the leading extremity of the slot. The trailing portion has a boundary 236 which forms the outlet of the slot (e.g., falls along the trailing edge).

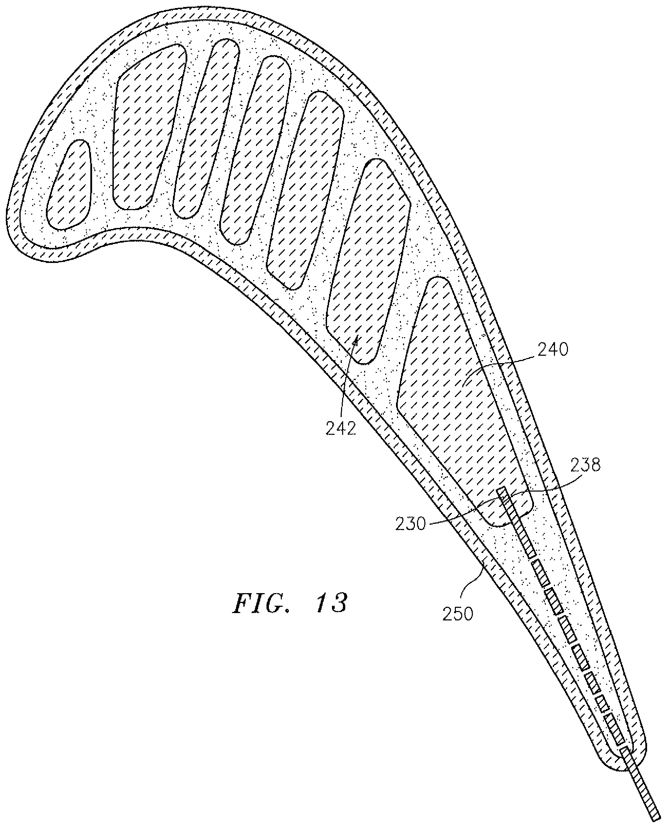

FIG. 13 shows the leading portion 230 embedded in a slot 238 in a trailing leg 240 of a ceramic feedcore 242. FIG. 13 specifically shows a situation where the metal has been cast in a shell 250 (schematically shown at reduced thickness) over the assembly of the feedcore 242 and RMC.

In other situations, the relatively high stress areas might fall along opposite sides of the slot at different portions thereof. In such a situation, correspondingly mixed orientation of posts.

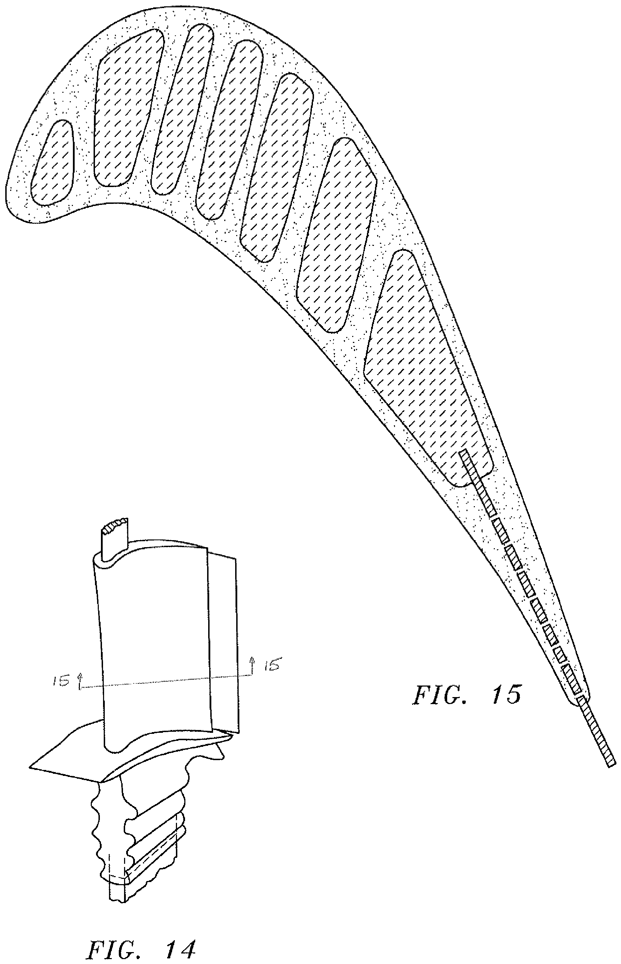

FIGS. 14 and 15 show a pattern for casting the blade. The exemplary pattern comprises a combination of casting cores (core combination) and a pattern material (e.g., wax) in which the core combination is at least partially embedded. The pattern material has an external surface generally corresponding to the external surface of the blade (i.e., having an airfoil, a platform, and a root). The core combination has an external surface (complementary to the mating internal surface of the pattern material) generally corresponding to portions of the passageway system. For purposes of illustration, FIG. 14 shows the combination in solid lines and the pattern material in broken lines.

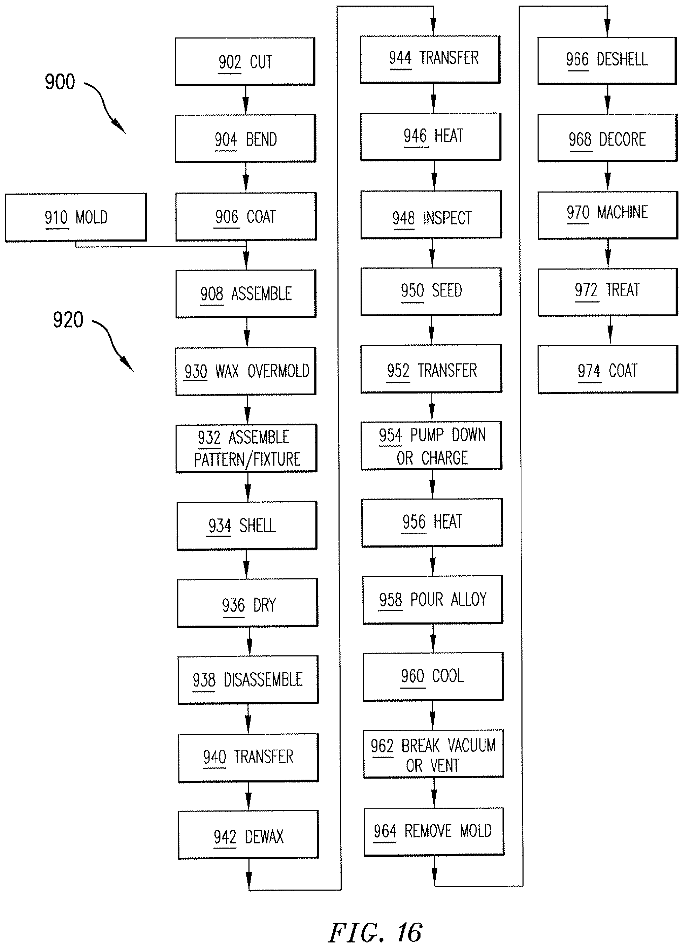

Steps in the manufacture 900 of the core assembly and casting are broadly identified in the flowchart of FIG. 16. In a cutting operation 902 (e.g., including the one or more punchings and abrasive treatments above), one or more cuttings are cut from a blank for forming the RMCs. Each exemplary cutting has the cut features of the associated RMC including any holes (e.g., for forming posts or other features in the metallic core).

In a second step 904, if appropriate, each cutting is bent to form any contouring (e.g., to more slightly bend a portion of the metallic core to more closely follow an associated external surface (if any) of the cast part). More complex forming procedures are also possible. The RMC may receive an abrasive media treatment (e.g., tumbling) 905 as discussed above.

The RMC may be coated 906 with a protective coating. Exemplary coating materials include silica, alumina, zirconia, chromia, mullite and hafnia. Coatings may be applied by any appropriate line-of sight or non-line-of sight technique (e.g., chemical or physical vapor deposition (CVD, PVD) methods, plasma spray methods, electrophoresis, and sol gel methods). Individual layers may typically be 0.1 to 1 mil (2.5 to 25 micrometer) thick. Layers of Pt, other noble metals, Cr, Si, W, and/or Al, or other non-metallic materials may be applied to the metallic core elements for oxidation protection in combination with a ceramic coating for protection from molten metal erosion and dissolution.

The RMCs may then be mated/assembled 908 to the feedcore. For example, the feedcore may be pre-molded 910 and, optionally, pre-fired. Optionally, a ceramic adhesive or other securing means may be used. An exemplary ceramic adhesive is a colloid which may be dried by a microwave process. Alternatively, the feedcore may be overmolded to the RMCs. For example, the RMCs may be placed in a die and the feedcore (e.g., silica-, zircon-, or alumina-based) molded thereover.

FIG. 16 also shows an exemplary method 920 for investment casting using the composite core assembly. Other methods are possible, including a variety of prior art methods and yet-developed methods. The core assembly is then overmolded 930 with an easily sacrificed material such as a natural or synthetic wax (e.g., via placing the assembly in a mold (die) and molding the wax around it). There may be multiple such assemblies involved in a given mold.

The overmolded core assembly (or group of assemblies) forms a casting pattern with an exterior shape largely corresponding to the exterior shape of the part to be cast. The pattern may then be assembled 932 to a shelling fixture. The pattern may then be shelled 934 (e.g., via one or more stages of slurry dipping, slurry spraying, or the like). After the shell is built up, it may be dried 936. The drying provides the shell with at least sufficient strength or other physical integrity properties to permit subsequent processing. For example, the shell containing the invested core assembly may be disassembled 938 fully or partially from the shelling fixture and then transferred 940 to a dewaxer (e.g., a steam autoclave). In the dewaxer, a steam dewax process 942 removes a major portion of the wax leaving the core assembly secured within the shell. The shell and core assembly will largely form the ultimate mold. However, the dewax process typically leaves a wax or byproduct hydrocarbon residue on the shell interior and core assembly.

After the dewax, the shell is transferred 944 to a furnace (e.g., containing air or other oxidizing atmosphere) in which it is heated 946 to strengthen the shell and remove any remaining wax residue (e.g., by vaporization) and/or converting hydrocarbon residue to carbon. Oxygen in the atmosphere reacts with the carbon to form carbon dioxide. Removal of the carbon is advantageous to reduce or eliminate the formation of detrimental carbides in the metal casting. Removing carbon offers the additional advantage of reducing the potential for clogging the vacuum pumps used in subsequent stages of operation.

The mold may be removed from the atmospheric furnace, allowed to cool, and inspected 948. The mold may be seeded 950 by placing a metallic seed in the mold to establish the ultimate crystal structure of a directionally solidified (DS) casting or a single-crystal (SX) casting. Nevertheless the present teachings may be applied to other DS and SX casting techniques (e.g., wherein the shell geometry defines a grain selector) or to casting of other microstructures. The mold may be transferred 952 to a casting furnace (e.g., placed atop a chill plate in the furnace). The casting furnace may be pumped down to vacuum 954 or charged with a non-oxidizing atmosphere (e.g., inert gas) to prevent oxidation of the casting alloy. The casting furnace is heated 956 to preheat the mold. This preheating serves two purposes: to further harden and strengthen the shell; and to preheat the shell for the introduction of molten alloy to prevent thermal shock and premature solidification of the alloy.

After preheating and while still under vacuum conditions, the molten alloy is poured 958 into the mold and the mold is allowed to cool to solidify 960 the alloy (e.g., after withdrawal from the furnace hot zone). After solidification, the vacuum may be broken 962 and the chilled mold removed 964 from the casting furnace. The shell may be removed in a deshelling process 966 (e.g., mechanical breaking of the shell).

The core assembly is removed in a decoring process 968 to leave a cast article (e.g., a metallic precursor of the ultimate part). The cast article may be machined 970, chemically and/or thermally treated 972 and coated 974 to form the ultimate part. Some or all of any machining or chemical or thermal treatment may be performed before the decoring.

## Claims

1. A method for engineering a cast part, the cast part having internal passageways including a slot, the slot being cast over a metallic sheet casting core, wherein:
the metallic sheet casting core has:
a first face;
a second face opposite the first face; and
a plurality of holes extending between the first and second faces;
the slot includes a first face cast by the core first face, a second face cast by the core second face, and a plurality of posts extending between the slot first and second faces and cast by the holes; and
the method comprises selecting a direction for punching the holes so that an asymmetry in hole cross section associated with said direction provides an asymmetry in post cross section associated with one or both of a desired relative heat transfer and a desired relative mechanical strength at said slot second face relative to said slot first face.

2. The method of claim 1 wherein a perimeter portion of the core and at least some of said holes are punched the same direction.

3. The method of claim 1 or 2 wherein a first group of said holes is punched from an opposite direction relative to a second group of said holes.

4. The method any preceding claim performed using a computer model wherein:
the computer model reflects the asymmetry in post cross section, and optionally including a computer modeling of heat transfer including a difference in thermal loading across the slot and a difference in heat transfer associated with the asymmetry in post cross section.

## Patentansprüche

1. Verfahren zur Herstellung eines Gussteils, wobei das Gussteil innere Durchlässe aufweist, die einen Schlitz beinhalten, wobei der Schlitz über einen Metallblechgusskern gegossen ist, wobei:
der Metallblechgusskern Folgendes aufweist:
eine erste Fläche;
eine zweite Fläche gegenüber der ersten Fläche; und
eine Vielzahl von Löchern, die sich zwischen der ersten und zweiten Fläche erstreckt;
wobei der Schlitz eine erste Fläche gegossen durch die erste Fläche des Kerns, eine zweite Fläche gegossen durch die zweite Fläche des Kerns und eine Vielzahl von Stützen beinhaltet, die sich zwischen der ersten und zweiten Fläche des Schlitzes erstreckt und durch die Löcher gegossen ist; und
das Verfahren das Auswählen einer Richtung zum Stanzen der Löcher umfasst, sodass eine Asymmetrie im Lochquerschnitt in Verbindung mit der Richtung eine Asymmetrie im Stützenquerschnitt in Verbindung mit einem oder beidem von einer gewünschten relativen Wärmeübertragung und einer gewünschten relativen mechanischen Stärke an der zweiten Fläche des Schlitzes relativ zu der ersten Fläche des Schlitzes bereitstellt.

2. Verfahren nach Anspruch 1, wobei ein Umfangsabschnitt des Kerns und zumindest einige der Löcher in derselben Richtung gestanzt werden.

3. Verfahren nach Anspruch 1 oder 2, wobei eine erste Gruppe der Löcher aus einer gegenüberliegenden Richtung relativ zu einer zweiten Gruppe der Löcher gestanzt wird.

4. Verfahren nach einem vorhergehenden Anspruch, das unter Verwendung eines Computermodells durchgeführt wird, wobei:
das Computermodell die Asymmetrie im Stützenquerschnitt reflektiert, und optional beinhaltend eine Computermodellierung von Wärmeübertragung, beinhaltend einen Unterschied der Wärmelast quer über den ersten Schlitz und einen Unterschied der Wärmeübertragung in Verbindung mit der Asymmetrie im Stützenquerschnitt.

## Revendications

1. Procédé de fabrication d'une pièce coulée, la pièce coulée comportant des passages internes comprenant une fente, la fente étant coulée sur un noyau de coulée en feuille métallique, dans lequel :
le noyau de coulée en feuille métallique comporte :
une première face ;
une seconde face opposée à la première face ; et
une pluralité d'orifices s'étendant entre les première et seconde faces ;
la fente comprend une première face coulée par la première face du noyau, une seconde face coulée par la seconde face du noyau, et une pluralité de montants s'étendant entre les première et seconde faces de la fente et coulés par les orifices ; et
le procédé comprend la sélection d'une direction de perçage des orifices de sorte qu'une asymétrie dans la section transversale des orifices associée à ladite direction produise une asymétrie dans la section transversale des montants associée à l'un ou aux deux d'un transfert de chaleur relatif souhaité et d'une résistance mécanique relative souhaitée au niveau de ladite seconde face de fente par rapport à ladite première face de fente.

2. Procédé selon la revendication 1, dans lequel une partie périmètrique du noyau et au moins certains desdits orifices sont percés dans la même direction.

3. Procédé selon la revendication 1 ou 2, dans lequel un premier groupe desdits orifices est percé dans une direction opposée par rapport à un second groupe desdits orifices.

4. Procédé selon une quelconque revendication précédente, réalisé à l'aide d'un modèle informatique dans lequel :
le modèle informatique reflète l'asymétrie dans la section transversale des montants, et comprenant éventuellement une modélisation informatique du transfert de chaleur comprenant un écart de charge thermique à travers la fente et un écart de transfert thermique associée à l'asymétrie dans la section transversale des montants.
